# EUROPEAN PATENT APPLICATION

(11) **EP 1 393 842 A1**
(43) Date of publication of application: **03.03.2004**
(21) Application number: 03425039.9
(22) Date of filing: 28.01.2003
(51) Int. Cl.: B23B 51/04

(54) **Insert bit for drilling, turning and spot-facing**

(30) Priority: 19.06.2002 IT BS20020079 U
(71) Applicant: Noma di Belleri F.lli S.n.c., 25060 Marcheno V.T. (Brescia) (IT)
(72) Inventor: Belleri, Lorenzo, 25060 Marcheno (Brescia) (IT)
(74) Representative: Crippa, Paolo Ernesto

(57) **Abstract**

This utility model regards an insert bit for drilling, turning and spot-facing on lathes, milling machines and work stations, including a stalk for coupling to a chuck installed on these machines and a front cutting part made up of at least three cutters (12') , each with at least one processing insert (14) at the end.

## Description

This project regards tools for drilling, turning and spot-facing ladies, nulling machines and work stations, and refers particularly to a new bit for these kinds of processes.

These drilling, turning and spot-facing processes are carried out using a bit with two cutters which usually oppose each other, each with a processing insert at one end. Within a set range of bit diameters it is always possible to use the same type of insert; bits with different diameters only vary due to the different radial position of the inserts, so that when they turn they always work across the whole surface of the bottom of the hole or semi-hole to be processed. When the diameter of the bit does not allow for continuity of the two inserts, it is necessary to use bigger inserts. So the whole range of bit diameters is covered by numerous types of insert.

The aim of this project is to propose and supply an insert bit for drilling, turning and spot-facing processes which enables the use of the same insert for all diameters and therefore for the whole range of bits available.

This is achieved with an insert bit for drilling, turning and spot-facing processes on lathes, milling machines and work stations, including a coupling stalk which fits into a chuck installed on these machines and a front cutting part, where said front part is made up of at least three cutters, each with at least one processing insert at the end.

Further details of the project will become clearer as the description continues with reference to the drawings enclosed, which are to be considered mere drafts and not binding in any way, and include:
Figures 1 and 2, which show, viewed from the ends, two examples of different diameter bits provided for by the project;
Figure 3, which shows a detail of the bit shown in Figure 2;
Figures 4 and 5, which show two examples of use of the bit to make a hole using a lathe and internal turning respectively.

In these drawings the number 10 is used to indicate an insert bit for drilling, turning and spot-facing on lathes, milling machines and work stations. The bit has a standard stalk (11) for coupling to a chuck installed on these processing machines and a front cutting part (12).

In accordance with the project, this helicoidal cutting part (12) is made up of at least three cutters (12'), each with at least one seat (13) created at the end to house a processing insert (14). Depending on the diameter of the bit, these seats (13) are created at suitable radial distances from the tool axis so that the inserts (14), making circular crowns as they turn, starting from the centre of the bit, intersect or do not present any discontinuity between each other, so that the whole surface of the bottom (15) of the hole or semi-hole of a piece is processed evenly. The addition of at least one cutter (12') to the bit, compared with existing bits, makes it possible to multiply the possibilities for positioning the inserts with respect to the tool rotation axis, and therefore to cover bits with much bigger diameters than those covered at the moment, with a single type of insert.

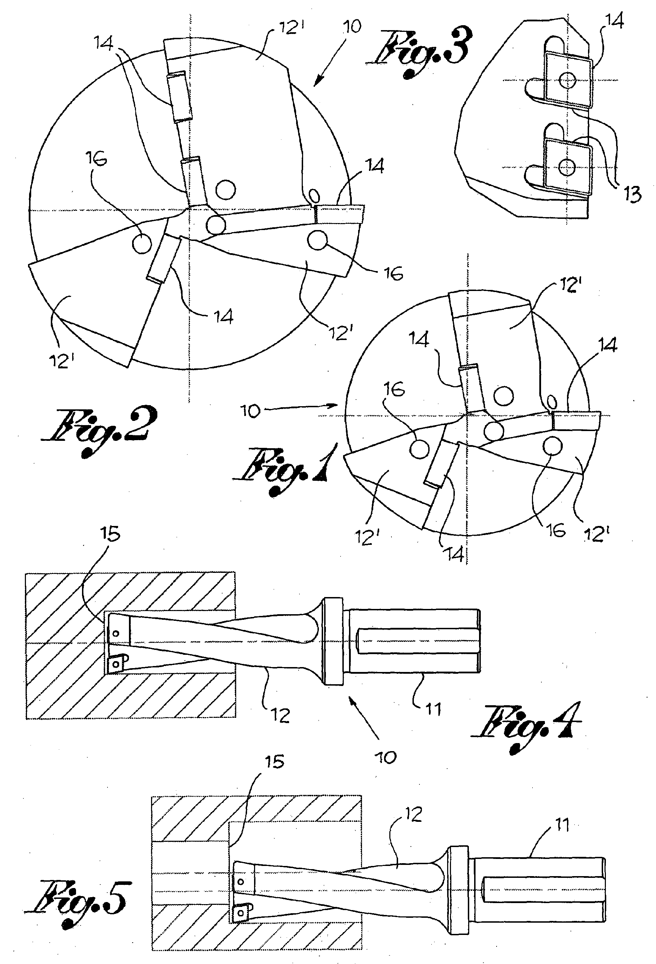

For example, Figure 1 shows a bit with three cutters and three inserts, in which a first insert is fastened to a first cutter so that if the edge coincides with the centre of the bit, a second insert is fastened to a second cutter in an intermediate position , and a third insert in fastened to a third cutter in a more external position Figure 2 represents a bigger diameter bit, with three cutters and four inserts. In this case, one cutter holds two inserts (14), spaced radially from one another, one of which is tangential to the centre of the bit, a second cutter holds an insert positioned in line with the space between the aforementioned two inserts, and a third cutter holds a fourth insert in a peripheral position.

The end of every cutter of the bits in question is also crossed by a hole (16) through which coolant passes.

## Claims

1. Insert bit for drilling, turning and spot-facing on lathes, milling machines and work stations, including a standard stalk (11) for coupling to a chuck installed on these machines and a front cutting part (12), **characterised by** the fact that it is made up of at least three cutters, each with at least one processing insert (14) at the end.

2. Insert bit according to claim 1, in which the inserts are fastened into respective seats created in the cutters at radial distances from the bit axis so that the inserts, making circular crowns as they turn, starting from the centre of the bit, intersect with each other during a process to eliminate any discontinuity on the whole surface of the bottom of a hole or semi-hole.

3. Insert bit according to claims 1 and 2, in which a cutter holds an insert which is tangential to the bit rotation axis.
